# EUROPEAN PATENT SPECIFICATION

(11) **EP 4 666 376 B1**
(45) Date of publication and mention of the grant of the patent: **28.10.2026**
(21) Application number: 24711887.0
(22) Date of filing: 14.03.2024
(51) Int. Cl.: H02K 15/00, H02K 15/03, H02K 7/18, H01F 13/00

(54) **SYSTEM AND METHOD FOR PROCESSING MAGNET ELEMENTS OF A WIND TURBINE GENERATOR COMPONENT**
SYSTEM UND VERFAHREN ZUR VERARBEITUNG VON MAGNETELEMENTEN EINER WINDTURBINENGENERATORKOMPONENTE
SYSTÈME ET PROCÉDÉ DE TRAITEMENT D'ÉLÉMENTS MAGNÉTIQUES D'UN COMPOSANT DE GÉNÉRATEUR D'ÉOLIENNE

(30) Priority: 11.04.2023 EP 23167266
(43) Date of publication of application: 24.12.2025
(73) Proprietor: Siemens Gamesa Renewable Energy A/S, 7330 Brande (DK)
(72) Inventor: AZAR, Ziad, Sheffield South Yorkshire S10 4ED (GB); GONZALEZ, Adolfo Garcia, 7400 Herning (DK)
(74) Representative: SGRE-Association
(86) International application number: PCT/EP2024/056828
(87) International publication number: WO 2024/213338

(56) References cited:
- EP-A1- 2 555 393
- EP-A1- 2 571 148
- EP-A1- 2 930 824
- EP-A1- 4 159 641
- EP-A1- 4 160 628
- WO-A1-2022/183704
- CN-A- 107 681 845
- CN-A- 113 014 043
- CN-A- 115 833 428
- CN-A- 116 191 789
- DE-A1- 102013 221 594
- KR-A- 20130 023 968
- US-A- 5 691 589
- US-A1- 2012 073 118
- US-A1- 2013 169 392
- US-A1- 2017 222 506
- US-B2- 9 660 492

## Description

### FIELD OF THE INVENTION

The present invention relates to a system configured to process magnet elements of a wind turbine generator component and to a respective method.

### BACKGROUND

Over the past years, the size of wind turbines and their output power has been increasing significantly. Modern high power wind turbines include direct drive wind turbines in which the generator rotor is directly coupled to the wind turbine rotor without intervening gearbox. Such direct drive generators often employ permanent magnets, usually on the generator rotor. For an exemplary wind turbine, six tons of permanent magnets may for example be used on the generator rotor. For example, neodymium (Ne) iron (Fe) boron (B) permanent magnets are used, as they can generate high magnetic fields. The use of heavy rare earths (HREs) for manufacturing respective permanent magnets however faces challenges. For example, such material suffers from the fluctuation of HRE international prices. Also, the extraction and mining of such heavy rare earths has a high environmental impact. There is further a high criticality of these materials. The manufacturing of respective permanent magnets for equipping a generator rotor therewith thus involves several challenges.

The inventors have therefore found that it is desirable to re-use permanent magnet material and in particular to recover such permanent magnet material at the end of life of respective wind turbine generators. Such recovery however faces several difficulties, in particular since due to the high permanent magnetic fields, the magnets can generate high forces so that handling by personnel may be dangerous. Further, since a generator rotor may have more than 1.000 magnets, their recycling is expensive and time-consuming. Even further, due to the magnetic forces generated by respectively strong permanent magnets, their removal from the generator rotor and further processing may face difficulties Documents EP4160628A1 and US2017/222506A1 disclose systems configured to process magnet elements of the prior art.

### SUMMARY

Accordingly, there is a need to mitigate at least some of the drawbacks mentioned above. In particular, there is a need to provide a simple and efficient way of enabling the reuse of material from permanent magnets provided in a wind turbine generator.

This need is met by the features of the independent claims. The dependent claims describe embodiments of the invention.

According to an embodiment of the invention, a system configured to process magnet elements of a wind turbine generator component is provided. Each magnet element comprises one or more permanent magnet blocks, wherein the system comprises at least two processing stages. These include a first processing stage comprising an extraction system configured to extract one or more magnet elements from the wind turbine generator component. The extraction system comprises an extraction device and a support structure configured to support the wind turbine generator component relative to the extraction device to enable the extraction of the one or more magnet elements. The at least two processing stages further include a second processing stage comprising a demagnetization system configured to demagnetize extracted magnet elements. The system further comprises a transport system configured to transport extracted magnet elements between the at least two processing stages. The system is configured to automatically process different magnet elements e.g., of the wind turbine generator component by extracting a magnet element by means of the extraction system, transporting the extracted magnet element to the demagnetization system by means of the transport system, and demagnetizing the magnet element by means of the demagnetization system.

By such automatic extraction and demagnetization, the magnet elements may be removed fast and efficiently from the wind turbine generator component. As the transport of the extracted magnet elements to the demagnetization device occurs automatically, risks for service personnel are minimized. Safety may thereby be improved. Such automated system may further achieve a high throughput for magnet extraction and demagnetization. The system may allow the extraction of the magnet elements at a high rate, for example in excess of 20, 50 or even 100 magnet elements per hour. Such automated extraction and demagnetization may further facilitate the transportation of the magnet elements to subsequent processing, such as disassembly of magnet elements and recycling of permanent magnet material. Further, such automatic extraction device may overcome the high forces required for separating the magnet elements from the generator component. Even further, compared to other conceivable methods, extracting the magnet elements may make the magnet elements easier to process and in particular may facilitate demagnetization and subsequent disassembly.

The system, which may be termed processing system, may certainly comprise additional processing stages (herein abbreviated as stages), e.g., intervening or subsequent processing stages. The system may be configured to continuously process magnet elements. It may for example operate continuously until a certain number of magnet elements, preferably all magnet elements of the wind turbine generator component (herein abbreviated as generator component, or component) have been processed. The processing steps at the different stages and the transport may overlap in time, i.e., a magnet element may be extracted at the first stage while at the same time, other magnet elements may be transported by the transport system and/or may be demagnetized by the demagnetization system, and/or may be processed at a further stage.

In an embodiment, the extraction system and the demagnetization system are provided as separate modules. The transport system may be configured to interconnect the extraction system and the demagnetization system. Alternatively, the extraction system and the demagnetization system may be arranged at different locations (e.g., at different sites, in particular different sites remote from reach other). The transport system may be configured to transport extracted magnet elements from the extraction system to the demagnetization system (e.g., by using a conveyor, a transport vessel, a vehicle or a combination thereof). Such modularization of the system and of the processing stages may facilitate the transport and assembly of the system. The system may thus easily be transported to a port and be set up there to process components of decommissioned wind turbines that arrive at the port.

The transport system may comprise one or more conveyors. It may comprise distinct conveyors at each stage and/or conveyors that connect the different stages. For example, the transport system may comprise an intermediate conveyor between the extraction system and the transport system, a conveyor at the extraction system that transports extracted magnet elements from the extraction device to the intermediate conveyor, and a conveyor at the demagnetization system that receives magnet elements from the intermediate conveyor. Such configuration of the transport system may facilitate the providing of the extraction system and the demagnetization system as separate modules and the connection of both modules by means of the intermediate conveyor.

The extraction system, the demagnetization system, and the transport system may be synchronized with respect to the processing of magnet elements. In particular, there may be a correspondence (or equality) of the rate at which the extraction system extracts magnet elements from the generator component, the rate at which the transport system transports magnet elements to the demagnetization system, and the rate at which the demagnetization system demagnetizes magnet elements. Further processing stages and other components of the system may be synchronized as well. A continuous processing of the magnet elements with high throughput may thereby be achieved.

The demagnetization system may be configured to fit inside a standard shipping container for transportation. The system may for example comprise a shipping container, and the demagnetization system may be disposed in the shipping container and may be operable within the shipping container. This may further facilitate transport of the system and setting up of the system at a location at which wind turbine components are to be processed.

The shipping container may for example be a standard container, such as a 20, 24, or 40 foot container. It may in particular be an intermodal container, e.g. a container under ISO standard 668:2020 or comparable standard.

The system may comprise a control system configured to control at least the extraction system, the demagnetization system, and the transport system to perform said automatic processing of magnet elements. The control system may further be configured to control any of the other elements of the system described herein. The control system may comprise respective control instructions stored on a volatile or non-volatile memory thereof and executable by a processing unit of the control system to perform the control.

The shipping container may comprise a control room, wherein the control system is disposed in the control room. The control room may be separated from the demagnetization system by a wall in the container. Service personnel operating the system may thus further be protected during operation, as they may control the system from the separate control room.

The extraction system may be configured to fit inside a shipping container, such as the above-mentioned standard container, for transportation. Transport and assembly of the system may thereby further be facilitated. The first and second processing stages may thus be provided as separate modules in the same or in separate shipping containers. The whole system may thus easily be transported to and assembled at a new location.

The magnet element may comprise a support in form of a base plate, or an enclosure comprising a base plate and a cover, or any other type of encapsulation or support. It may thus be designated as a magnet module.

In an embodiment, the magnet element comprises an enclosure or support, wherein the at least two processing stages include a third processing stage comprising a separation system configured to separate the enclosure or support from the one or more permanent magnet blocks. Such separation system may provide an efficient and safe separation of the magnet elements from their respective enclosure or support. By separating the magnet elements into their components, a recycling of both, the permanent magnet blocks as well as the constituents of the enclosure or support may be facilitated. An environmentally friendly separation of the main components in preparation for magnet recycling may be achieved.

The separation system is preferably arranged after the demagnetization system, but may also be arranged before the demagnetization system. The former configuration has the advantage that disassembly is facilitated after demagnetization, since high magnetic forces can be avoided. The safety for service personnel may thereby further be increased.

The third processing stage may form a separate module, or may form a module together with the demagnetization system. The separation system may be disposed in a shipping container and may be operable within the shipping container. Preferably, the separation system is disposed in the same shipping container as the demagnetization system. A compact configuration that can easily be transported may thereby be achieved. Further, the interface between both stages may be provided in a simple and efficient way, such as by a common conveyor.

In other implementations, the separation system may be separate from the first and second stages. Separation may for example occur at a different location than extraction and demagnetization.

The separation system may comprise a separation device. The separation device may comprise an actuator configured to push the one or more permanent magnet blocks and/or to push the enclosure during the separation. Additionally or alternatively, the separation device may comprise a cutting device configured to cut the enclosure of the magnet element. An efficient and simple separation may thereby be achieved. The separation system may further comprise a holding device configured to hold the magnet element during separation. For example, the holding device may hold the enclosure of the magnet element, and the actuator may push the one or more permanent magnet blocks out of the enclosure. The cutting device may be used to cut open the enclosure, e.g. for separating different parts of the enclosure and/or for providing an opening for the permanent magnet block(s).

The separation system may further comprise a collection system for collecting the separated components of the magnet elements. Such collection may occur in respective containers, and/or by transporting the separated components to further processing stages, e.g. one or more material recycling stages.

The transport system may comprise a first transport section configured to transport extracted magnet elements from the extraction system to the demagnetization system and a second transport section configured to transport demagnetized magnet elements from the demagnetization system to the separation system. An automated processing of magnet elements including the separation may thereby be achieved. The first and/or second transport sections may for example comprise one or more conveyors.

Different conveyors may be used for the first and second transport sections; it is however also conceivable to use a common conveyor, e.g. a throughgoing conveyor from the extraction system to the separation system.

Any conveyor known in the art may be used with the transport system, such as a belt, chain, slat or other conveyors, or any other known transport device.

The transport system may comprise a common conveyor passing through the demagnetization system and the separation system. A compact and efficient transportation and processing of magnet elements may thereby be achieved. Preferably, such common conveyor comprises carriers, each being configured to carry a magnet element. These may be driven by a belt, chain, or other suitable device. The common conveyor may be controllable to dispose magnet elements within heating devices of the demagnetization system, and to remove magnet elements from such heating devices, e.g. induction heaters. This may occur by means of such carriers, or by a belt or slats of the conveyor running though the heating devices or the like. The common conveyor may be disposed in the shipping container.

The extraction system may be configured to provide alignment between the generator component and the extraction device, e.g. by means of the support structure. The generator component may be supported relative to the extraction device by supporting the generator component with respect to a fixedly mounted extraction device, or by mounting the extraction device to generator component.

The wind turbine generator component may comprise plural rows of magnet elements. The extraction system may comprise a positioning device configured to automatically position the wind turbine generator component relative to the extraction device so as to provide alignment between the extraction device and a row of the wind turbine generator component. The extraction device may be configured to extract one or more magnet elements from the aligned row. Such positioning may occur under control of the control system. A position sensor may further be provided to sense the position of the generator component. Such position control may accelerate the extraction of magnet elements. In particular, after extracting all magnet elements from a row, the generator component may automatically be repositioned to align a new row with the extraction device. For example, the positioning device may be configured to rotate the generator component.

The extraction device may comprise a hydraulic, pneumatic, or electrical actuator configured to extract one or more magnet elements from the generator component. For example, by means of the actuator, the one or more magnet elements may be pushed or pulled from the generator component, e.g. using a hook, or otherwise disassembled therefrom. Preferably, the magnet elements are still magnetized when being extracted.

The demagnetization system may comprise at least one, two, or more heating stations, e.g. 1, 2, 3, 4 or more. Each heating station may comprise an induction heater configured to heat a magnet element. The transport system may be configured to transport each magnet element consecutively to each of the at least one heating station for being heated at the respective heating station. Such demagnetization system may provide a fast and efficient demagnetization of the magnet elements. In particular, by such induction heating, an efficient heat transfer to the magnet element may be achieved, and the heating time may be reduced significantly. Further, by providing heating at different heating stations, and in particular by the magnet element passing one heating station after the other and being heated therein, the throughput of the demagnetization system may be increased significantly, and the overall time required to demagnetize a magnet element may further be reduced. Consequently, the system may operate continuously to fast and efficiently extract and demagnetize plural magnet elements.

The demagnetization system may further include a perforation station configured to provide an opening in an enclosure or encapsulation of the magnet element. By opening the enclosure, any fumes or gases that are generated by evaporation of any adhesive or coating present in the enclosure due to the inductive heating can be released. Destruction of the enclosure due to an increase in internal pressure can thereby be avoided. The perforation station may include a drill or other device for perforating the enclosure of the magnet element.

The induction heater at the two or more heating stations may for example comprise an induction heating coil. The coil has preferably a single winding. Fast and efficient heating may thus be achieved.

The demagnetization system may further comprise an induction generator configured to generate an electrical drive signal for driving the induction heater. A common induction generator driving each induction heater, or individual induction generators for each induction heater may be provided. Such induction heater may be arranged in the control room of the above-mentioned container.

The system may further comprise a gas treatment system configured to treat gases and/or fumes emitted when demagnetizing magnet elements by means of the demagnetization system, for example in one or more of the heating stations mentioned above. Gasses, fumes, or vapors generated by the heating, e.g. due to evaporation or burning of glue, adhesive, or coating of the magnet elements, may thus be removed so that they are not released into the environment. The one or more permanent magnet blocks may for example be glued to a cover and/or base plate of the enclosure, and the respective adhesive may be burned and evaporated by the heating.

The gas treatment system may be disposed in the shipping container in which the demagnetization system is disposed, and may be operable within the shipping container. Accordingly, the gas treatment system may be transported and deployed together with the demagnetization system, which further facilitates transport and assembly of the overall system.

The generator component may for example be a generator rotor, but may also be a generator stator, in particular of a direct drive generator.

According to another embodiment of the invention, a method of processing magnet elements of a wind turbine generator component is provided. Each magnet element comprises one or more permanent magnet blocks, wherein the method processes magnet elements by at least two processing stages. The method comprises the steps of: at a first processing stage, extracting a magnet element from the wind turbine generator component by means of an extraction system, wherein the extraction system comprises an extraction device and a support structure configured to support the wind turbine generator component relative to the extraction device to enable the extraction of the one or more magnet elements; transporting the extracted magnet element to a demagnetization system by means of a transport system; and at a second processing stage, demagnetizing the magnet element by means of the demagnetization system. The method automatically processes different magnet elements of the wind turbine generator component by the at least two processing stages. By such method, advantages similar to the ones outlined further above may be achieved.

The method may process the magnet elements at further processing stages, such as a third processing stage comprising a separation system having any of the configurations described herein.

The steps of the method may be repeated for the different magnet elements of the generator component, preferably until all magnet elements of the generator component have been processed. In particular, the extraction and demagnetization steps, and optionally the separation step, may be performed for each magnet element of the generator component.

Each magnet element may be processed consecutively at each of the processing stages, wherein the different processing stages may process different magnet elements simultaneously. A high throughput processing of plural magnet elements may thereby be achieved.

The method may further comprise any of the steps described herein with respect to the system. Further, the control system may be configured to cause the processing system to perform any of the methods described herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating a system for processing magnet elements according to an embodiment.
Figs. 2 is a schematic drawing illustrating a magnet element according to an embodiment.
Fig. 3 is a schematic drawing illustrating a system for processing magnet elements according to an embodiment.
Fig. 4 is a schematic drawing illustrating the modular design of the extraction system of the system Fig. 3 and the transportation thereof in a standard container.
Fig. 5 is a schematic drawing illustrating the modular design of the demagnetization system of the system Fig. 3 and the operation thereof in a standard container.
Fig. 6 is a flow diagram illustrating a method of extracting magnet elements according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

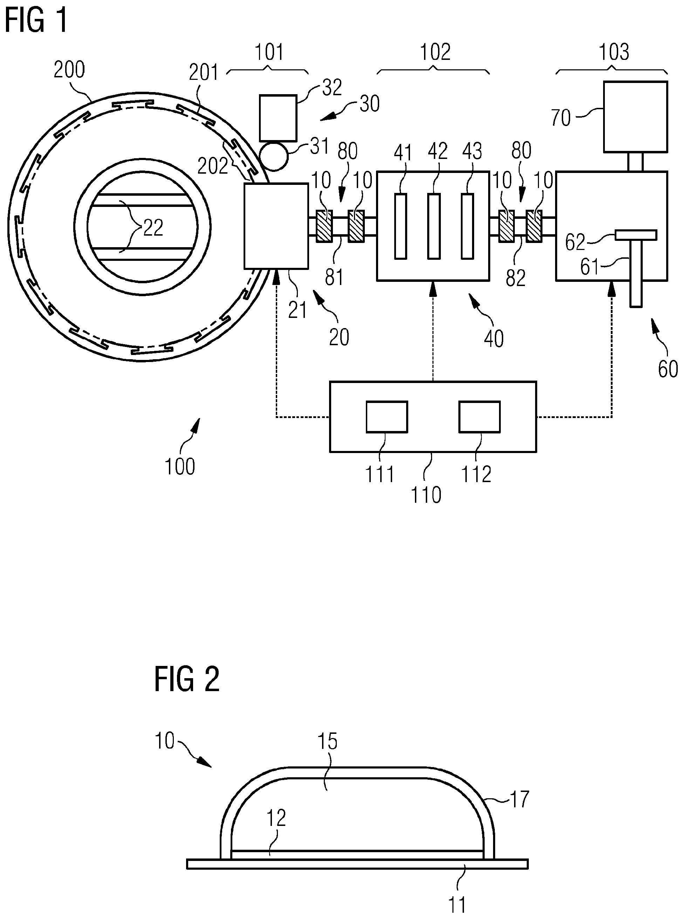

Fig. 1 schematically illustrates a system 100 according to an embodiment. System 100 includes a first processing stage 101 comprising an extraction system 20 and a second processing stage 102 comprising a demagnetization system 40. System 100 further includes an optional third processing stage 103 comprising a separation system 60.

Extraction system 20 is configured to extract magnet elements 10 from a wind turbine (WT) generator component 200. The generator component 200 has a cylindrical shape, and the cylinder axis of this shape extends perpendicular to the drawing plane. On the inner cylindrical surface, plural rows 202 are provided, wherein each row 202 comprises one, two or more, for example between one and ten, magnet elements 10. Component 200 may have respective slots 201, which are T-shaped in the present example. Magnet elements 10 may have been inserted into slots 201 during assembly, as for example explained in the document EP 2 555 393 A1. However, magnet elements 10 may be mounted in any conceivable way to the generator component 200, which may be a generator rotor or generator stator.

Figure 2 shows an exemplary implementation of a magnet element 10, which includes a base plate 11 onto which one or more permanent magnet blocks 15 are mounted by means of an adhesive 12. Magnet block 15 is arranged inside a cover 17, which may for example be made of sheet metal. Base plate 11 and cover 17 form an enclosure. Magnet element 10 may thus be an encapsulated or housed permanent magnet and may also be designated as magnet module. The base plate 11 may be made of steel and the cover 17 may be made of stainless steel. Accordingly, separation of the different components of magnet element 10 for the purpose of recycling, as provided by the present solution, is beneficial. In other implementations, magnet block 15 may for example only be mounted to a support plate 11. Support plate 11 is received in the T-shaped slot 201.

Extraction system 20 comprises an extraction device 21 that is configured to extract the one or more magnet elements from row 202, until all magnet elements have been extracted from the row. For this purpose, the extraction device 21 may include an actuator 23, such as a hydraulic cylinder, which is configured to push or pull the magnet element(s) 10 from the slot 201. After all magnet elements have been extracted from a row 202, a positioning device 30 of extraction system 20 is used to align a new row 202 with the extraction device 21. The positioning device 30 comprises a roller 31 that rests against an inner or outer circumferential surface of the component 200 and a motor 32 that drives the roller 31. Other configurations of positioning device 30 are also conceivable.

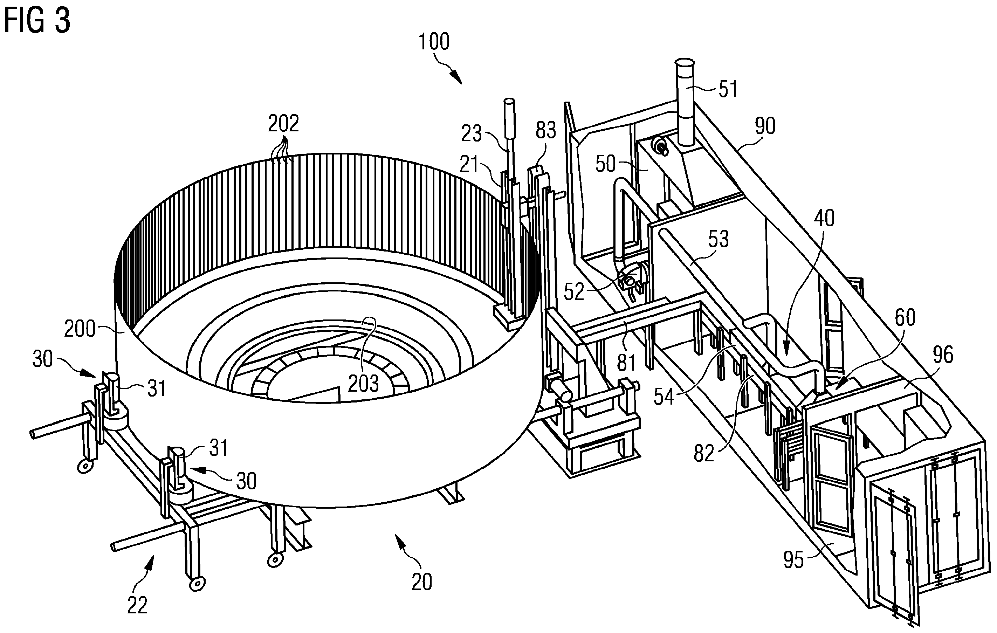

The extraction system 20 comprises a support structure 22 on which the component 200 is supported. Component 200 may be supported rotatably, for example by means of a bearing 203 (Fig. 3). Support structure 22 thus allows a relative positioning and alignment between a row 202 of component 200 and the extraction device 21. The extraction system 200 may further comprise a position sensor to detect the position of component 200. Precise alignment may thereby be ensured. Extraction system 20 may thus extract the magnet elements of all rows 202 of the component 200.

The system 100 comprises a transport system 80 that interconnects the at least two processing stages 101, 102 and optionally 103. A first conveyor 81 of the transport system 80 automatically transports extracted magnet elements 10 from the extraction system 20 to the demagnetization system 40. First conveyor 81 may be a belt, chain, slat or other type of conveyor.

The demagnetization system 40 comprises 1, 2, 3 or more heating stations, wherein three heating stations 41, 42 and 43 are provided in the present example. Each heating station includes an induction heater (not shown). The transport system 80 transports each extracted magnet element 10 to each heating station 41, 42 and 43, where it is heated. Preferably, the heating system 40 is configured such that by heating in the different heating stations, the one or more permanent magnet blocks 15 of the magnet element 10 reach the Curie temperature above which the permanent magnet blocks become demagnetized. The number of heating stations, the heating duration at each heating station, and the heating power of at each heating station may be adapted in accordance with the dimensions of the magnet element such that the permanent magnet block(s) 15 reach or exceed the Curie temperature in the demagnetization system 40.

The transport system 80 may include a conveyor that runs through the heating stations, or may include carries on which the magnet elements 10 are disposed and are inserted into the induction heaters of the heating stations.

By providing plural such heating stations 41, 42, 43, a respective number of magnet elements 10 may be heated simultaneously. Further, by such arrangement employing plural induction heaters, the time required to reach the demagnetization temperature may be reduced significantly.

Further, the demagnetization system 40 may comprise a perforation station (not shown) at which one or more openings are created in an enclosure of the permanent magnet element 10, e.g. by drilling or cutting openings into cover 17. This is beneficial if the enclosure of magnet element 10 is gas tight, so that if adhesive 12 evaporates during the heating, the resulting gases can escape through such openings. Otherwise, the magnet element 10 may burst and may cause damage to demagnetization system 40.

The transport system 80 may include a second conveyor 82 that transports demagnetized magnet elements from the demagnetization system 40 to the separation system 60. Either one of conveyors 81, 82 may extend into the demagnetization system 40 and may be used to transport magnet elements within demagnetization system 40. In other configurations, demagnetization system 40 may comprise a separate transport device for this purpose.

The separation system 60 receives magnet elements 10 by the conveyor 82 and separates the one or more permanent magnet blocks 15 from the enclosure, e.g. from support plate 11 and cover 17. This is facilitated by the demagnetization system 40, since the adhesive 12 may have been evaporated. The separation system 60 may comprise an actuator 61, such as a hydraulic cylinder, and a pushing block and/or cutting device 62 that is actuated by the actuator 61. Separation system 60 may further comprise a holding device (not shown) configured to hold the magnet element 10 during separation, e.g. by holding (part) of its enclosure. For example, the holding device may hold the enclosure of the magnet element, and the pushing block 62 pushes the one or more permanent magnet blocks 15 out of the enclosure, e.g. out of cover 17. A respective cutting device may be used to cut open the enclosure, and/or may be used to separate the enclosure into further sub-components, e.g. by separating cover 17 from base plate 11. Separation system 60 may accordingly be configured to separate the magnet element 10 into its different constituents. Preferably, it is configured to separate at least the one or more permanent magnet blocks 15 from the enclosure or support.

Separation system 60 may further comprise a collection system 70 that collects the components of magnet elements 10 that have been separated. These may be collected together or individually by collection system 70. Collection system 70 may comprise respective collection containers, or may also comprise collection and transport devices that transport the collected components to further processing stages, such as a material recycling stage.

System 100 may include a control system 110 that controls the different elements of system 100. Control system 110 may control the extraction system 20, the demagnetization system 40, the separation system 60 and the transport system 80, in particular the components of these systems. Under control of control system 110, the system 100 may continuously process magnet elements of component 200, until all magnet elements of component 200 have been processed.

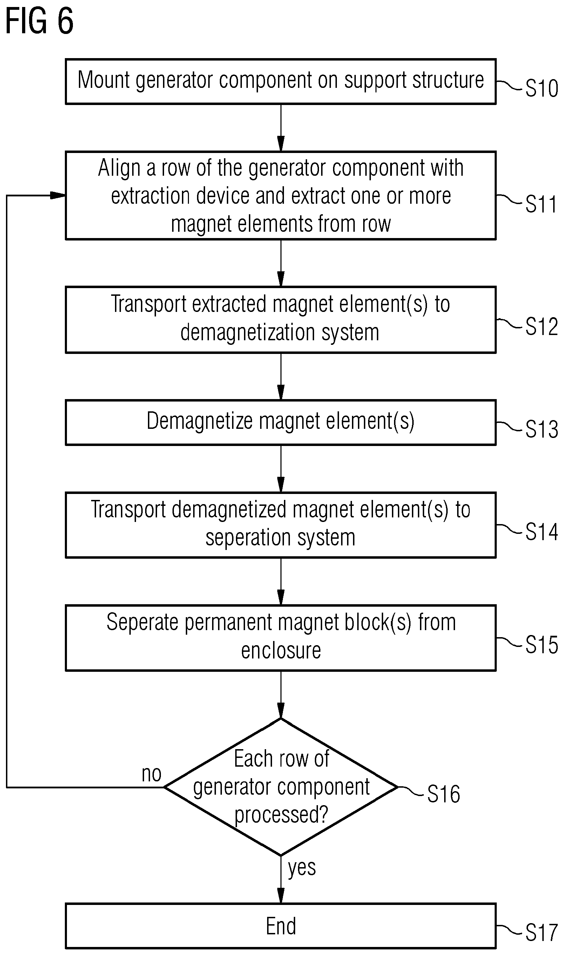

An exemplary implementation of such method is illustrated in the flow diagram of Fig. 6. In step S10, the generator component 200 is mounted on the support structure 22 (see Fig. 3 for details). In step S11, a row 202 of component 200 is aligned with the extraction device 21. The extraction device 21 is then operated to extract one or more magnet elements 10 from the row. Preferably, one element is extracted after the other, so that the extracted elements can be transported away while other elements are being processed at other stages of the system 100.

In step S12, the extracted magnet elements are transported to the demagnetization system 40 by conveyor 81. It should be clear that further transports steps may be performed within extraction system 20, for example to position the magnet elements 10 in the desired orientation on the conveyor 81. In step S13, the magnet elements are demagnetized in the demagnetization system 40, **e.g.** by consecutive heating in the heating stations 41, 42, and 43. After demagnetization, the magnet elements are transported to the separation system 60 in step S14. This may occur via the second conveyor 82, but the first conveyor 81 may alternatively pass through the whole system 100. In step S15, the one or more permanent magnet blocks 15 are separated from the enclosure of the magnet elements 10. This may comprise separation from the base plate 11 and the cover 17. Optionally, cover 17 may further be separated from the base plate 11, which may occur in the same separation step S15 or in an additional separation step. The method may optionally comprise a collection step in which the permanent magnet block(s) 15 are collected separately from or together with the enclosure of the magnet element 10.

In step S16, it is checked if each row 202 of the generator component 200 has been processed, in particular if all magnet elements have been extracted from the component 200. If not, then the method continues in step S11 with the processing of the next row 202. If all magnet elements have been processed, the method ends (step S17).

It should be clear that several steps of the method are optional, such as steps S14 and S15, and that the steps may be performed in a different order.

Turning back to Fig. 1, such method may be performed by control system 110 controlling the components of system 100. The control system 110 may operate system 100 to continuously process magnet elements 10 at processing stages 101, 102 and 103 until all magnet elements have been processed. A high throughput and automatic processing of the magnet elements of component 200 without human intervention may thus be achieved.

Control system 110 may comprise a processing unit 111 and a memory 112. Memory 112 may comprise control instructions configured to be executed by processing unit 111. By executing the instructions by processing unit 111, the control system 110 may cause the system 100 to perform any of the methods described herein. Processing unit 111 may include a microprocessor, an application specific integrated circuit, a digital signal processor, or the like. Memory 112 may include any type of volatile and non-volatile memory, such as RAM, ROM, Flash-Memory, or the like. Control system 110 may comprise any other elements common to a computing system, such as respective input and output interfaces for receiving information and sending control signals to the respective systems 20, 40, 60 and 80, as well as a user interface.

Figure 3 shows a particular implementation of the system 100 of Fig. 1, so that the above explanations are equally applicable. Component 200 is supported by the support structure 22 of the extraction system 20. Component 200 is rotatable via bearing 203 by operation of positioning devices 30 including rollers 31. A row 202 of component 200 is aligned with the extraction device 21 that includes the hydraulic cylinder 23, which is actuated to pull magnet elements out of the respective slot. A vertical conveyor 83 transports the extracted magnet elements onto conveyor 81 of transport system 80. Conveyor 83 may form part of the extraction system 20 or of the transport system 80. Conveyor 81 provides the transport connection towards the second processing stage, which involves the demagnetization system 40.

The demagnetization system 40 is provided in a shipping container 90. Conveyor 81 of transport system 80 is arranged to transport extracted magnet elements into the shipping container. Transport system 80 includes a second conveyor 82 that conveys the extracted magnet elements through the demagnetization system 40 within the shipping container. The transport system is configured to automatically transfer the magnet elements 10 from the first conveyor 81 to the second conveyor 82.

By such configuration, the demagnetization system 40 can be easily transported and set up at a location at which the processing should occur. Merely the conveyor 81 needs to be arranged to interconnect the extraction system 20 with the demagnetization system 40. The system 100 further includes the optional separation system 60, which may be arranged in the same shipping container 90. In the present example, the second conveyor 82 reaches through the demagnetization system 40 and the separation system 60. It may thus transport the magnet elements 10 to both of these systems.

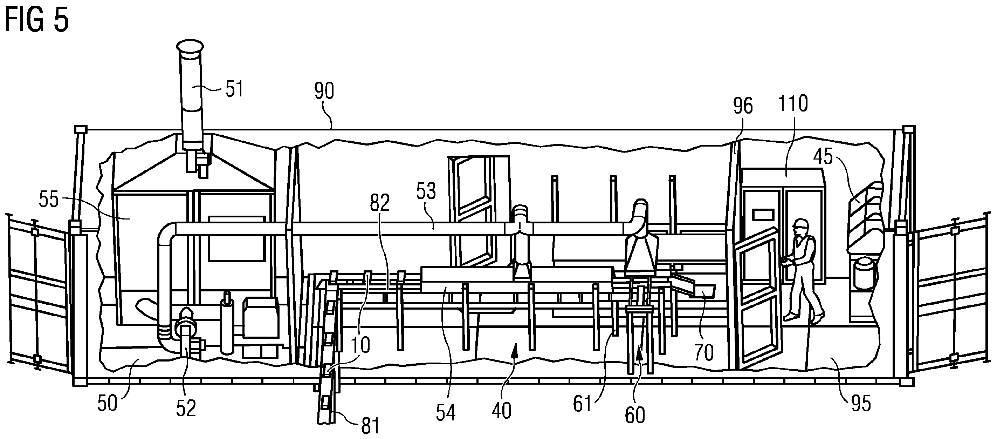

The system 100 may further comprise a gas treatment system 50, which may be arranged in container 90. Gas treatment system 50 is configured to treat gasses, fumes and other emissions that may be generated when heating magnet elements 10 in the demagnetization system 40. Such emissions may be due to evaporation and burning of adhesive 12. Gas treatment system 50 includes a blower 52 by means of which gasses are sucked in through the emission collection element 54 disposed above the heating stations 41-43. Piping 53 connects the emission collection element 54, which may be similar to an exhaust hood, to the blower 52. The gas treatment system 60 filters and/or otherwise treats the gas and in particular removes contaminants, **e.g.** using filters 55 (Fig. 5). The cleaned gas is exhausted via exhaust pipe 51.

The arrangement is better visible in Fig. 5, which shows a perspective front view of container 90 including the demagnetization system 40 with its gas treatment system 50, and the separation system 60. As can be seen, the magnet elements 10 are brought into container 90 via conveyor 81, are transferred to conveyor 82, pass through the demagnetization system 40 and are finally separated in into their constituents in the separation system 60. The separation system 60 may include a collection system 70 which in the present example is provided in form of one or more containers and respective chutes over which the separated constituents drop into the containers.

System 100 may further comprise a control room 95 in which the control system 110 is provided. Control room 95 may be located in container 90 and may be separated from the second and third processing stages 102, 103 by a container wall 96. The safety of the service personnel may thereby further be increased, as user interfaces of control system 110 can be operated from the control room 95 protected by wall 96. Control room 95 may comprise further components of system 100, such as an induction generator 45 that drives induction coils of the induction heaters of heating stations 41-43 of the demagnetization system 40. A safe, compact, and easily deployable processing system may thus be achieved.

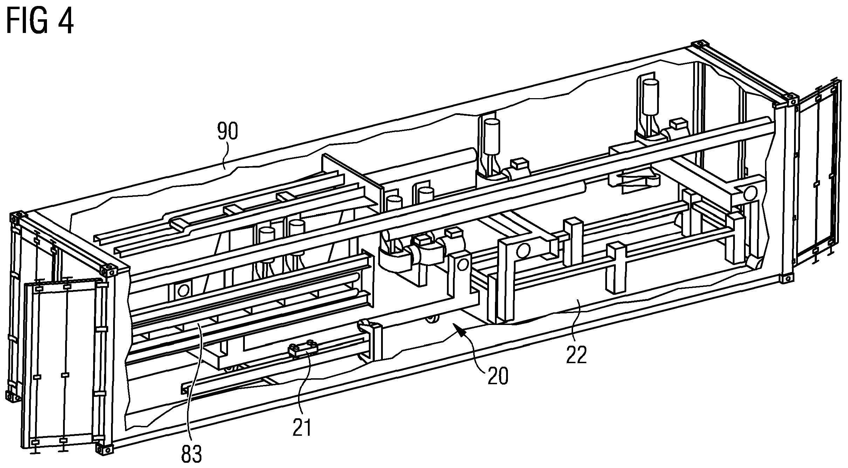

The extraction system 20 may be provided as a module that can be interconnected with the respective demagnetization module comprising demagnetization system 40 via transport system 80, in particular conveyor 81. the respective module, i.e. the extraction system 20, is preferably configured to fit into a standard shipping container, as illustrated in Fig. 4. The shipping container 90 (e.g. a 20, 24, or 40 foot standard container) takes up all elements of the extraction system 20, including the extraction device 21, the support structure 22 and the vertical conveyor 83.

System 100 may thus be configured to be transportable within two shipping containers 90. To set up system 100, only the extraction system 20 needs to be assembled, and the conveyor 81 needs to be connected to the demagnetization system 40 in the second shipping container 90, as shown in Fig. 3. System 100 is thus easily transportable and can be set up at a port at which components of decommissioned wind turbines of an offshore wind farm arrive. Distances over which the large and heavy wind turbine generator components have to be transported can thereby be minimized. The amount of heavy rare earth virgin material needed to manufacture new magnets by extracting and recycling the magnet elements from the generator component may thus be reduced.

The system 100 may be configured to achieve a processing of magnet elements at a rate of more than 50, 80 or even 100 magnet elements per hour, including extraction, demagnetization, and separation. A fast, safe, and large scale extraction thus becomes possible.

While specific embodiments are disclosed herein, various changes and modifications can be made without departing from the scope of the invention. The present embodiments are to be considered in all respects as illustrative and nonrestrictive, and all changes coming within the meaning and equivalency range of the appended claims are intended to be embraced therein.

## Claims

1. A system configured to process magnet elements (10) of a wind turbine generator component (200), each magnet element (10) comprising one or more permanent magnet blocks (15), wherein the system comprises at least two processing stages (101, 102) including:
- a first processing stage (101) comprising an extraction system (20) configured to extract one or more magnet elements (10) from the wind turbine generator component (200), wherein the extraction system (20) comprises an extraction device (21) and a support structure (22) that is configured to support the wind turbine generator component (200) relative to the extraction device (21) to enable the extraction of the one or more magnet elements (10); and
- a second processing stage (102) comprising a demagnetization system (40) configured to demagnetize extracted magnet elements (10),
wherein the system further comprises a transport system (80) configured to transport extracted magnet elements (10) between the at least two processing stages (101, 102), and wherein the system (100) is configured to automatically process different magnet elements (10) of the wind turbine generator component (200) by extracting a magnet element (10) by means of the extraction system (20), transporting the extracted magnet element (10) to the demagnetization system (40) by means of the transport system (80), and demagnetizing the magnet element (10) by means of the demagnetization system (40).

2. The system according to claim 1, wherein the extraction system (20) and the demagnetization system (40) are provided as separate modules, wherein the transport system (80) is configured to interconnect the extraction system (20) and the demagnetization system (40), or wherein the extraction system (20) and the demagnetization system (40) are arranged at different locations and the transport system (80) is configured to transport extracted magnet elements (10) from the extraction system (20) to the demagnetization system (40).

3. The system according to claim 1 or 2, wherein the extraction system (20), the demagnetization system (40), and the transport system (80) are synchronized with respect to the processing of magnet elements (10).

4. The system according to any of the preceding claims, wherein the system (100) further comprises a shipping container (90), the demagnetization system (40) being disposed in the shipping container (90) and being operable within the shipping container (90).

5. The system according to any of the preceding claims, further comprising a control system (110) configured to control at least the extraction system (20), the demagnetization system (40), and the transport system (80) to perform said automatic processing of magnet elements.

6. The system according to claims 4 and 5, wherein the shipping container (90) comprises a control room (95), wherein the control system (110) is disposed in the control room (95), and wherein the control room (95) is separated from the demagnetization system (40) by a wall (96) in the container (90).

7. The system according to any of the preceding claims, wherein the magnet element (10) comprises an enclosure (11, 17) or support, wherein the at least two processing stages include a third processing stage (103) comprising a separation system (60) configured to separate the enclosure (11, 17) or support from the one or more permanent magnet blocks (15) .

8. The system according to claim 7 when dependent on claim 4, wherein the separation system (60) is disposed in the shipping container (90) and is operable within the shipping container.

9. The system according to claim 7 or 8, wherein the separation system (60) comprises a separation device, wherein the separation device comprises an actuator (61) configured to push the one or more permanent magnet blocks (15) and/or to push the enclosure (11, 17) during the separation and/or wherein the separation device comprises a cutting device configured to cut the enclosure (11, 17) of the magnet element.

10. The system according to any of claims 7-9, wherein the transport system comprises a first transport section (81) configured to transport extracted magnet elements (10) from the extraction system (20) to the demagnetization system (40) and a second transport section (82) configured to transport demagnetized magnet elements (10) from the demagnetization system (40) to the separation system (60).

11. The system according to any of claims 7-10, wherein the transport system (80) comprises a common conveyor (82) passing through the demagnetization system (40) and the separation system (60).

12. The system according to any of the preceding claims, wherein the wind turbine generator component (200) comprises plural rows (202) of magnet elements, and wherein the extraction system comprises a positioning device (30) configured to automatically position the wind turbine generator component (200) relative to the extraction device (21) so as to provide alignment between the extraction device (21) and a row (202) of the wind turbine generator component (200), the extraction device (21) being configured to extract one or more magnet elements (10) from the aligned row (202).

13. The system according to any of the preceding claims, wherein the demagnetization system (40) comprises one, two or more heating stations (41, 42, 43), wherein each heating station comprises an induction heater configured to heat a magnet element (10), wherein the transport system (80) is configured to transport each magnet element (10) consecutively to each of the one, two, or more heating stations (41, 42, 43) for being heated at the respective heating station.

14. The system according to any of the preceding claims, further comprising a gas treatment system (50) configured to treat gases and/or fumes emitted when demagnetizing magnet elements (10) by means of the demagnetization system (40).

15. A method of processing magnet elements (10) of a wind turbine generator component (200), each magnet element (10) comprising one or more permanent magnet blocks (15), wherein the method processes magnet elements (10) by at least two processing stages (101, 102), the method comprising the steps of:
- at a first processing stage (101), extracting a magnet element (10) from the wind turbine generator component (200) by means of an extraction system (20), wherein the extraction system (20) comprises an extraction device (21) and a support structure (22) configured to support the wind turbine generator component (200) relative to the extraction device (21) to enable the extraction of the one or more magnet elements (10),
- transporting the extracted magnet element (10) to a demagnetization system (40) by means of a transport system (80), and
- at a second processing stage (102), demagnetizing the magnet element (10) by means of the demagnetization system (40),
wherein the method automatically processes different magnet elements (10) of the wind turbine generator component (200) by the at least two processing stages (101, 102).

## Patentansprüche

1. System, das dazu konfiguriert ist, Magnetelemente (10) einer Windturbinengeneratorkomponente (200) zu bearbeiten, wobei jedes Magnetelement (10) einen oder mehrere Permanentmagnetblöcke (15) umfasst, wobei das System mindestens zwei Bearbeitungsstufen (101, 102) umfasst, die Folgendes beinhalten:
- eine erste Bearbeitungsstufe (101), umfassend ein Extraktionssystem (20), das dazu konfiguriert ist, ein oder mehrere Magnetelemente (10) aus der Windturbinengeneratorkomponente (200) zu extrahieren, wobei das Extraktionssystem (20) eine Extraktionsvorrichtung (21) und eine Trägerstruktur (22) umfasst, die dazu konfiguriert ist, die Windturbinengeneratorkomponente (200) relativ zu der Extraktionsvorrichtung (21) zu tragen, um die Extraktion des einen oder der mehreren Magnetelemente (10) zu ermöglichen; und
- eine zweite Bearbeitungsstufe (102), umfassend ein Entmagnetisierungssystem (40), das dazu konfiguriert ist, extrahierte Magnetelemente (10) zu entmagnetisieren,
wobei das System ferner ein Transportsystem (80) umfasst, das dazu konfiguriert ist, extrahierte Magnetelemente (10) zwischen den mindestens zwei Bearbeitungsstufen (101, 102) zu transportieren, und wobei das System (100) dazu konfiguriert ist, unterschiedliche Magnetelemente (10) der Windturbinengeneratorkomponente (200) durch Extrahieren eines Magnetelements (10) mittels des Extraktionssystems (20), Transportieren des extrahierten Magnetelements (10) zu dem Entmagnetisierungssystem (40) mittels des Transportsystems (80) und Entmagnetisieren des Magnetelements (10) mittels des Entmagnetisierungssystems (40) automatisch zu bearbeiten.

2. System nach Anspruch 1, wobei das Extraktionssystem (20) und das Entmagnetisierungssystem (40) als separate Module bereitgestellt sind, wobei das Transportsystem (80) dazu konfiguriert ist, das Extraktionssystem (20) und das Entmagnetisierungssystem (40) miteinander zu verbinden, oder wobei das Extraktionssystem (20) und das Entmagnetisierungssystem (40) an unterschiedlichen Stellen angeordnet sind und das Transportsystem (80) dazu konfiguriert ist, extrahierte Magnetelemente (10) von dem Extraktionssystem (20) zu dem Entmagnetisierungssystem (40) zu transportieren.

3. System nach Anspruch 1 oder 2, wobei das Extraktionssystem (20), das Entmagnetisierungssystem (40) und das Transportsystem (80) in Bezug auf das Bearbeiten von Magnetelementen (10) synchronisiert sind.

4. System nach einem der vorhergehenden Ansprüche, wobei das System (100) ferner einen Beförderungscontainer (90) umfasst, wobei das Entmagnetisierungssystem (40) in dem Beförderungscontainer (90) angeordnet ist und innerhalb des Beförderungscontainers (90) betreibbar ist.

5. System nach einem der vorhergehenden Ansprüche, ferner umfassend ein Steuersystem (110), das dazu konfiguriert ist, mindestens das Extraktionssystem (20), das Entmagnetisierungssystem (40) und das Transportsystem (80) zu steuern, um die automatische Bearbeitung von Magnetelementen durchzuführen.

6. System nach Anspruch 4 und 5, wobei der Beförderungscontainer (90) einen Steuerraum (95) umfasst, wobei das Steuersystem (110) in dem Steuerraum (95) angeordnet ist und wobei der Steuerraum (95) von dem Entmagnetisierungssystem (40) durch eine Wand (96) in dem Container (90) getrennt ist.

7. System nach einem der vorhergehenden Ansprüche, wobei das Magnetelement (10) ein Gehäuse (11, 17) oder einen Träger umfasst, wobei die mindestens zwei Bearbeitungsstufen eine dritte Bearbeitungsstufe (103) beinhalten, die ein Trennsystem (60) umfasst, das dazu konfiguriert ist, das Gehäuse (11, 17) oder den Träger von dem einen oder den mehreren Permanentmagnetblöcken (15) zu trennen.

8. System nach Anspruch 7, wenn abhängig von Anspruch 4, wobei das Trennsystem (60) in dem Beförderungscontainer (90) angeordnet ist und innerhalb des Beförderungscontainers betreibbar ist.

9. System nach Anspruch 7 oder 8, wobei das Trennsystem (60) eine Trennvorrichtung umfasst, wobei die Trennvorrichtung einen Aktor (61) umfasst, der dazu konfiguriert ist, den einen oder die mehreren Permanentmagnetblöcke (15) zu schieben und/oder das Gehäuse (11, 17) während der Trennung zu schieben, und/oder wobei die Trennvorrichtung eine Schneidvorrichtung umfasst, die dazu konfiguriert ist, das Gehäuse (11, 17) des Magnetelements zu schneiden.

10. System nach einem der Ansprüche 7-9, wobei das Transportsystem einen ersten Transportabschnitt (81), der dazu konfiguriert ist, extrahierte Magnetelemente (10) von dem Extraktionssystem (20) zu dem Entmagnetisierungssystem (40) zu transportieren, und einen zweiten Transportabschnitt (82), der dazu konfiguriert ist, entmagnetisierte Magnetelemente (10) von dem Entmagnetisierungssystem (40) zu dem Trennsystem (60) zu transportieren, umfasst.

11. System nach einem der Ansprüche 7-10, wobei das Transportsystem (80) einen gemeinsamen Förderer (82) umfasst, der durch das Entmagnetisierungssystem (40) und das Trennsystem (60) verläuft.

12. System nach einem der vorhergehenden Ansprüche, wobei die Windturbinengeneratorkomponente (200) mehrere Reihen (202) von Magnetelementen umfasst und wobei das Extraktionssystem eine Positioniervorrichtung (30) umfasst, die dazu konfiguriert ist, die Windturbinengeneratorkomponente (200) relativ zu der Extraktionsvorrichtung (21) automatisch zu positionieren, um eine Ausrichtung zwischen der Extraktionsvorrichtung (21) und einer Reihe (202) der Windturbinengeneratorkomponente (200) bereitzustellen, wobei die Extraktionsvorrichtung (21) dazu konfiguriert ist, ein oder mehrere Magnetelemente (10) aus der ausgerichteten Reihe (202) zu extrahieren.

13. System nach einem der vorhergehenden Ansprüche, wobei das Entmagnetisierungssystem (40) eine, zwei oder mehr Heizstationen (41, 42, 43) umfasst, wobei jede Heizstation eine Induktionsheizung umfasst, die dazu konfiguriert ist, ein Magnetelement (10) zu beheizen, wobei das Transportsystem (80) dazu konfiguriert ist, jedes Magnetelement (10) nacheinander zu jeder der einen, der zwei oder der mehreren Heizstationen (41, 42, 43) zu transportieren, damit es an der jeweiligen Heizstation beheizt wird.

14. System nach einem der vorhergehenden Ansprüche, ferner umfassend ein Gasbehandlungssystem (50), das dazu konfiguriert ist, Gase und/oder Dämpfe zu behandeln, die beim Entmagnetisieren von Magnetelementen (10) mittels des Entmagnetisierungssystems (40) emittiert werden.

15. Verfahren zum Bearbeiten von Magnetelementen (10) einer Windturbinengeneratorkomponente (200), wobei jedes Magnetelement (10) einen oder mehrere Permanentmagnetblöcke (15) umfasst, wobei das Verfahren Magnetelemente (10) durch mindestens zwei Bearbeitungsstufen (101, 102) bearbeitet, wobei das Verfahren die folgenden Schritte umfasst:
- in einer ersten Bearbeitungsstufe (101), Extrahieren eines Magnetelements (10) aus der Windturbinengeneratorkomponente (200) mittels eines Extraktionssystems (20), wobei das Extraktionssystem (20) eine Extraktionsvorrichtung (21) und eine Trägerstruktur (22) umfasst, die dazu konfiguriert ist, die Windturbinengeneratorkomponente (200) relativ zu der Extraktionsvorrichtung (21) zu tragen, um das Extrahieren des einen oder der mehreren Magnetelemente (10) zu ermöglichen,
- Transportieren des extrahierten Magnetelements (10) zu einem Entmagnetisierungssystem (40) mittels eines Transportsystems (80) und
- in einer zweiten Bearbeitungsstufe (102), Entmagnetisieren des Magnetelements (10) mittels des Entmagnetisierungssystems (40),
wobei das Verfahren automatisch unterschiedliche Magnetelemente (10) der Windturbinengeneratorkomponente (200) durch die mindestens zwei Bearbeitungsstufen (101, 102) bearbeitet.

## Revendications

1. Système configuré pour traiter des éléments magnétiques (10) d'un composant de générateur d'éolienne (200), chaque élément magnétique (10) comprenant un ou plusieurs blocs d'aimant permanent (15), dans lequel le système comprend au moins deux étages de traitement (101, 102) comprenant :
- un premier étage de traitement (101) comprenant un système d'extraction (20) configuré pour extraire un ou plusieurs éléments magnétiques (10) du composant de générateur d'éolienne (200), dans lequel le système d'extraction (20) comprend un dispositif d'extraction (21) et une structure de support (22) qui est configurée pour supporter le composant de générateur d'éolienne (200) par rapport au dispositif d'extraction (21) pour permettre l'extraction des un ou plusieurs éléments magnétiques (10) ; et
- un deuxième étage de traitement (102) comprenant un système de désaimantation (40) configuré pour désaimanter des éléments magnétiques (10) extraits,
dans lequel le système comprend en outre un système de transport (80) configuré pour transporter des éléments magnétiques (10) extraits entre les au moins deux étages de traitement (101, 102), et dans lequel le système (100) est configuré pour traiter automatiquement différents éléments magnétiques (10) du composant de générateur d'éolienne (200) par l'extraction d'un élément magnétique (10) au moyen du système d'extraction (20), le transport de l'élément magnétique (10) extrait vers le système de désaimantation (40) au moyen du système de transport (80), et la désaimantation de l'élément magnétique (10) au moyen du système de désaimantation (40).

2. Système selon la revendication 1, dans lequel le système d'extraction (20) et le système de désaimantation (40) sont fournis sous forme de modules séparés, dans lequel le système de transport (80) est configuré pour interconnecter le système d'extraction (20) et le système de désaimantation (40), ou dans lequel le système d'extraction (20) et le système de désaimantation (40) sont agencés à des emplacements différents et le système de transport (80) est configuré pour transporter des éléments magnétiques (10) extraits depuis le système d'extraction (20) vers le système de désaimantation (40).

3. Système selon la revendication 1 ou 2, dans lequel le système d'extraction (20), le système de désaimantation (40) et le système de transport (80) sont synchronisés en ce qui concerne le traitement d'éléments magnétiques (10).

4. Système selon l'une quelconque des revendications précédentes, dans lequel le système (100) comprend en outre un conteneur d'expédition (90), le système de désaimantation (40) étant disposé dans le conteneur d'expédition (90) et pouvant fonctionner à l'intérieur du conteneur d'expédition (90).

5. Système selon l'une quelconque des revendications précédentes, comprenant en outre un système de commande (110) configuré pour commander au moins le système d'extraction (20), le système de désaimantation (40) et le système de transport (80) pour réaliser ledit traitement automatique d'éléments magnétiques.

6. Système selon les revendications 4 et 5, dans lequel le conteneur d'expédition (90) comprend une salle de commande (95), dans lequel le système de commande (110) est disposé dans la salle de commande (95), et dans lequel la salle de commande (95) est séparée du système de désaimantation (40) par une paroi (96) dans le conteneur (90).

7. Système selon l'une quelconque des revendications précédentes, dans lequel l'élément magnétique (10) comprend une enceinte (11, 17) ou un support, dans lequel les au moins deux étages de traitement comprennent un troisième étage de traitement (103) comprenant un système de séparation (60) configuré pour séparer l'enceinte (11, 17) ou le support des un ou plusieurs blocs d'aimant permanent (15).

8. Système selon la revendication 7 lorsqu'elle dépend de la revendication 4, dans lequel le système de séparation (60) est disposé dans le conteneur d'expédition (90) et peut fonctionner à l'intérieur du conteneur d'expédition.

9. Système selon la revendication 7 ou 8, dans lequel le système de séparation (60) comprend un dispositif de séparation, dans lequel le dispositif de séparation comprend un actionneur (61) configuré pour pousser les un ou plusieurs blocs d'aimant permanent (15) et/ou pour pousser l'enceinte (11, 17) pendant la séparation et/ou dans lequel le dispositif de séparation comprend un dispositif de coupe configuré pour couper l'enceinte (11, 17) de l'élément magnétique.

10. Système selon l'une quelconque des revendications 7 à 9, dans lequel le système de transport comprend une première section de transport (81) configurée pour transporter des éléments magnétiques (10) extraits depuis le système d'extraction (20) vers le système de désaimantation (40) et une seconde section de transport (82) configurée pour transporter des éléments magnétiques (10) désaimantés depuis le système de désaimantation (40) vers le système de séparation (60).

11. Système selon l'une quelconque des revendications 7 à 10, dans lequel le système de transport (80) comprend un convoyeur commun (82) passant à travers le système de désaimantation (40) et le système de séparation (60).

12. Système selon l'une quelconque des revendications précédentes, dans lequel le composant de générateur d'éolienne (200) comprend de multiples rangées (202) d'éléments magnétiques, et dans lequel le système d'extraction comprend un dispositif de positionnement (30) configuré pour positionner automatiquement le composant de générateur d'éolienne (200) par rapport au dispositif d'extraction (21) de manière à fournir un alignement entre le dispositif d'extraction (21) et une rangée (202) du composant de générateur d'éolienne (200), le dispositif d'extraction (21) étant configuré pour extraire un ou plusieurs éléments magnétiques (10) de la rangée alignée (202).

13. Système selon l'une quelconque des revendications précédentes, dans lequel le système de désaimantation (40) comprend une, deux ou plus de deux stations de chauffage (41, 42, 43), dans lequel chaque station de chauffage comprend un dispositif de chauffage par induction configuré pour chauffer un élément magnétique (10), dans lequel le système de transport (80) est configuré pour transporter chaque élément magnétique (10) consécutivement vers chacune des une, deux ou plus de deux stations de chauffage (41, 42, 43) pour être chauffé au niveau de la station de chauffage respective.

14. Système selon l'une quelconque des revendications précédentes, comprenant en outre un système de traitement de gaz (50) configuré pour traiter des gaz et/ou des fumées émis lors de la désaimantation d'éléments magnétiques (10) au moyen du système de désaimantation (40).

15. Procédé de traitement d'éléments magnétiques (10) d'un composant de générateur d'éolienne (200), chaque élément magnétique (10) comprenant un ou plusieurs blocs d'aimant permanent (15), dans lequel le procédé traite des éléments magnétiques (10) par au moins deux étages de traitement (101, 102), le procédé comprenant les étapes consistant à :
- au niveau d'un premier étage de traitement (101), l'extraction d'un élément magnétique (10) du composant de générateur d'éolienne (200) au moyen d'un système d'extraction (20), dans lequel le système d'extraction (20) comprend un dispositif d'extraction (21) et une structure de support (22) configurée pour supporter le composant de générateur d'éolienne (200) par rapport au dispositif d'extraction (21) pour permettre l'extraction des un ou plusieurs éléments magnétiques (10),
- le transport de l'élément magnétique (10) extrait vers un système de désaimantation (40) au moyen d'un système de transport (80), et
- au niveau d'un deuxième étage de traitement (102), la désaimantation de l'élément magnétique (10) au moyen du système de désaimantation (40),
dans lequel le procédé traite automatiquement différents éléments magnétiques (10) du composant de générateur d'éolienne (200) par les au moins deux étages de traitement (101, 102).
